# EUROPÄISCHE PATENTANMELDUNG

(11) **EP 2 088 638 A2**
(43) Veröffentlichungstag der Anmeldung: **12.08.2009**
(21) Anmeldenummer: 09151519.7
(22) Anmeldetag: 28.01.2009
(51) Int. Cl.: H01M 8/04, H01M 8/06

(54) **Hochtemperaturbrennstoffzellensystem mit Abgasrückführung**

(30) Priorität: 07.02.2008 AT 1982008
(71) Anmelder: Vaillant GmbH, 42859 Remscheid (DE)
(72) Erfinder: Badenhop, Thomas, 51688 Wipperfürth (DE); Berg, Joachim, 42859 Remscheid (DE); Götz, Klaus, 42653 Solingen (DE); Kohlhage, Jörg, 45329 Essen (DE); Kraus, Matthias, 42929 Wermelskirchen (DE); Oerder, Bodo, 42897 Remscheid (DE); Paulus, Jochen, 42655 Solingen (DE)

(57) **Zusammenfassung**

Hochtemperaturbrennstoffzellensystem, welches eine brenngasführende Anode und eine luftführende Kathode, ein Reformer zur Brenngasbereitung und mindestens ein Wärmetauscher zur Nachbehandlung von Anodenabgas sowie ein Nachbrenner, angeordnet stromab der Anode und einer Rückführung eines Teils des Abgases aus der Anode in den Reformer aufweist.

## Beschreibung

Die Erfindung bezieht sich auf ein Hochtemperaturbrennstoffzellensystem mit einer Hochtemperaturbrennstoffzelle, die eine brenngasführende Anode und eine luftführende Kathode aufweist, bei dem eine Rückführung eines Teils des Abgases aus der Anode in einen Nachbrenner erfolgt.

Brennstoffzellen wandeln chemische Energie direkt in elektrische Energie um und bestehen aus einem ionenleitenden und gasdichten Elektrolyten, einer luftführenden Kathode und einer brenngasführenden Anode, die dem Elektrolyten angrenzen. Unterschiedliche Elektrolytarten definieren unterschiedliche Brennstoffzellentypen und deren Betriebstemperaturen. Eine Festoxidbrennstoffzelle (Solid Oxide Fuel Cell oder SOFC) ist eine Hochtemperatur-Brennstoffzelle, die bei einer Betriebstemperatur von 800 C - 1000°C betrieben wird. Der innere Ladungstransport einer solchen Hochtemperatur-Brennstoffzelle erfolgt mittels O₂-Ionen, wobei die SOFC-Brennstoffzelle auf der Anodenseite Sauerstoff zur Produktion von Wasser H₂O und/oder Kohlendioxid CO₂ an der Anode benötigt.

Da der ebenfalls für die Produktion von Wasser erforderliche Wasserstoff als Brennstoff in der Hausenergieversorgung in der Regel nicht zur Verfügung steht, muss dieser erst aus üblichen Brennstoffen z.B. Kohlenwasserstoffe wie Erdgas oder Heizöl EL hergestellt werden. Beim Betrieb von Brennstoffzellen mit solchen Kohlenwasserstoffen wird der Brennstoffzelle in der Regel ein Reformer vorgeschaltet, in dem ein wasserstoffreiches Gas (Reformat) aus dem Kohlenwasserstoff erzeugt (reformiert) wird. Als Reformierungsverfahren sind die Dampfreformierung, die autotherme Reformierung oder die katalytische partielle Oxidation bekannt. Bei der Dampfreformierung und der autothermen Reformierung ist Prozesswasser und somit ein aufwendiges Wasserleitungs- und - aufbereitungssystem für die Brennstoffzelle erforderlich. Nachteilig an der katalytischen partiellen Oxidation wiederum ist, dass es bei geringer Luftzufuhr zur Kohlenstoffbildung (Verkokung) und somit zu Schädigungen im Reformer oder an der Anode der Brennstoffzelle kommen kann. Dies wird u.a. durch die Boudouard-Reaktion verdeutlicht:

CO₂ + C ⇔ 2 CO.

Dabei geht es um das Gleichgewicht zwischen Kohlenstoffdioxid (CO₂) und Kohlenstoffmonoxid (CO), das bei der Umsetzung von Kohlenstoffdioxid mit Kohlenstoff entsteht.

Es ist auch bekannt, Anodenabgas teilweise in den Reformer zurückzuführen, wodurch eine größere Menge Wasserdampf in den Reformer gelangt und somit die Kohlenstoffbildung minimiert und der Wirkungsgrad des Reformers erhöht wird.

Aus den Druckschriften DE 40 05 468 A1 und DE 199 34 649 A1 sind Anordnungen bekannt, in denen unverbranntes wasserdampfhaltiges Anodenabgas in einen Reformer zurückgeführt wird, um dessen Effizienz zu steigern. Nachteil dieser Anordnungen ist, dass das Anodenabgas noch wasserstoffhaltig ist und somit die Bildung von Wasserstoff im Reformer behindert wird. Dies wird durch die Methanisierung (eine Rückreaktion der Dampfreformierung) verdeutlich:

3H₂+CO⇔CH₄+H₂O

Aus der DE 10 2005 038 733 A1 ist eine Anordnung bekannt, bei der das Anodenabgas einer SOFC Brennstoffzelle zunächst nachverbrannt wird und dann ein Teil dieses Anodenabgases in einen Reformer zu dessen Wirkungsgradsteigerung und Unterdrückung der Kohlenstoffbildung in den Reformer zurückgeführt wird. Ein entscheidender Nachteil dieser Anordnung ist, dass das heiße Abgas des Nachbrenners abgeleitet und aufgeteilt werden muss. Diese Anordnung erfordert somit den Einsatz korrosions- und temperaturbeständiger Materialien, welche kostenintensiv sind. Auch werden durch diese Anordnungen die Schwierigkeiten bei der Nachverbrennung durch den hohen Wasserdampfpartialdruck des Anodenabgases der SOFC Brennstoffzelle nicht beseitigt.

Die aus dem Stand der Technik bekannten Anordnungen für die Rückführung und die Zirkulation von heißem Anodenabgas einer Hochtemperaturbrennstoffzelle sind daher technisch aufwendig und kostenintensiv.

Der Erfindung liegt die Aufgabe zugrunde, ein Hochtemperaturbrennstoffzellensystem mit einer Anodenabgasrückführung zur Verfügung zu stellen, wodurch eine Versorgung des Reformers mit Wasser ohne externen Wasseranschluss gewährleistet ist sowie eine Beschädigung im Reformer und an der Anode einer Hochtemperaturbrennstoffzelle durch Kohlenstoffbildung auch bei geringer Luftzufuhr verhindert wird. Weiterhin soll die Nachverbrennung von Anodenabgas stabiler gestaltet werden.

Erfindungsgemäß wird diese Aufgabe gemäß den Merkmalen des Anspruchs 1 mit einem Hochtemperaturbrennstoffzellensystem gelöst, welches eine brenngasführende Anode und eine luftführende Kathode, ein Reformer zur Brenngasbereitung und mindestens ein Wärmetauscher zur Nachbehandlung von Anodenabgas sowie ein Nachbrenner, angeordnet stromab der Anode aufweist, wobei
- ein Kondensationswärmetauscher angeordnet zwischen der Anode und dem Nachbrenner zur Abkühlung von brenngashaltigem Anodenabgas vorgesehen ist, wobei der Kondensationswärmetauscher eine Kondensatleitung, die mit dem Eingang des Reformers verbunden ist, zur Rückführung kondensierten Wasserdampfs aufweist, und/oder
- ein Wärmetauscher angeordnet stromab des Nachbrenners vorgesehen ist, wobei der Wärmetauscher eine Abgasausgangsleitung mit einer Teilungsvorrichtung aufweist, wobei die Teilungsvorrichtung den Abgasstrom zum Zuführen in dem Reformer trennt, und/oder eine Kondensatleitung, die mit dem Eingang des Reformers verbunden ist, zur Rückführung kondensierten Wasserdampfs.

Durch die Rückführung des kondensierten Wasserdampfs in den Reformierungsprozess wird durch den Wasseranteil die Dampfreformierungsreaktion unterstützt, was zu einer höheren Wasserstoffgewinnung führt. Dies erhöht den Wirkungsgrad des Reformers und somit auch den elektrischen Wirkungsgrad des Brennstoffzellensystems. Durch den erhöhten Anteil von Wasser und kohlendioxidreichen Anodenabgas wird das Gleichgewicht im Reformer entsprechend der Boudouard-Reaktion so beeinflusst, dass auch bei geringer Luftzuführung ein erhöhter CO-Gehalt und somit eine Rußbildung an der Anode verhindert wird.

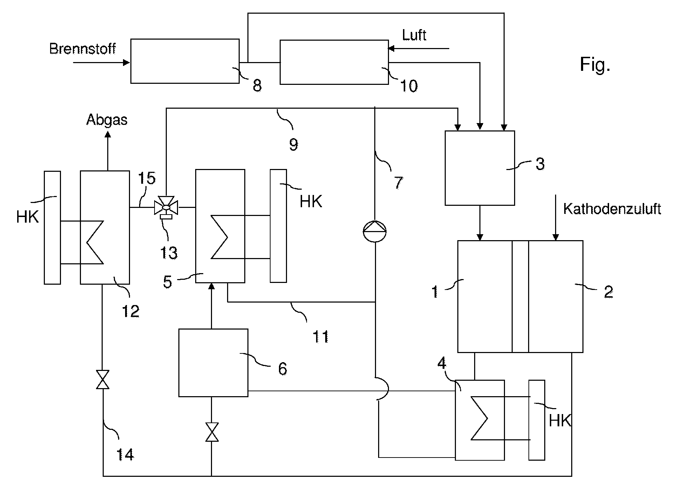

Weitere vorteilhafte Ausgestaltungen der Erfindung ergeben sich aus den Merkmalen der abhängigen Ansprüche und der Beschreibung. Die Erfindung wird nun anhand der Figur näher erläutert.

Die Figur zeigt ein Brennstoffzellensystem mit einer brenngasführenden Anode 1, einer luftführenden Kathode 2, einem Reformer 3 zur Brenngasbereitung und Wärmetauscher 4, 5 zur Nachbehandlung von Anodenabgas sowie ein Nachbrenner 6, angeordnet stromab der Anode 1.

Da nahezu alle Energieträger mehr oder weniger Schwefel enthalten und diese Schwefelverbindungen als Katalysatorgift wirken erfolgt zunächst eine Entschwefelung des Brennstoffs in einer Entschwefelungsvorrichtung 8 vor der Zuführung in einen Reformerbrenner 10 angeordnet vor dem Reformer 3. Über ein Zuluftgebläse wird der Reformerbrenner 10 mit Umgebungsluft und somit der Reformer 3 mit Restsauerstoff versorgt. Über ein Zuluftgebläse wird auch die Kathode 2 der Brennstoffzelle mit Umgebungsluft versorgt.

Das in der Anode 1 der SOFC Brennstoffzelle gebildete Produktwasser aus der Reaktion der Wasserstoffionen mit den Sauerstoffionen wird mit dem überschüssigen Brenngas aus der Anode 1 dem Kondensationswärmetauscher 4 zugeführt. Der Kondensationswärmetauscher 4 ist zwischen der Anode 1 und dem Nachbrenner 6 angeordnet. Das die Anode 1 verlassende noch brennbare Gas wird als Anodenabgas bezeichnet. Es besteht im Wesentlichen aus Stickstoff, Wasserdampf, Kohlenmonoxid, Kohlendioxid und Wasserstoff und wird direkt dem Kondensationswärmetauscher 4 zugeführt. Aufgrund des hohen vorherrschenden Wasserdampfpartialdruckes ergibt sich eine relativ hohe Taupunkttemperatur. Der Kondensationswärmetauscher 4 wird vom Rücklaufwasser eines Heizungswasserkreises HK gekühlt. So können größere Mengen des Dampfes kondensiert werden, selbst dann wenn die Rücklauftemperatur des Heizungswassers größer als 40°C ist. Das Anodenabgas wird dabei abgekühlt und der Wasserdampf teilweise oder vollständig kondensiert. Über eine Kondensatleitung 7 des Kondensationswärmetauschers 4, die mit dem Eingang des Reformers 3 verbunden ist, wird der kondensierte Wasserdampf in den Reformer 3 zurückgeführt. Die bei der Kondensation des Wasserdampfs entstehende Wärme wird auf das Heizungswasser übertragen.

In einer weiteren Ausführung kann das gebildete Kondensat zunächst in einem Tank gesammelt werden und über eine Dosierpumpe dem Reformerprozess zugeführt werden.

Durch das Auskondensieren steigt der Brenngasanteil im Anodenabgas an, so dass eine Nachverbrennung leichter möglich ist. Um die Nachverbrennung weiter zu erleichtern, kann das Anodenabgas und/oder die Nachverbrennungsluft entweder mit der warmen Kathodenabluft für die Nachverbrennung zur Steigerung der Aktivität vorgewärmt werden oder aber einen Teil der warmen Kathodenabluft als Oxidationsmittel für die Nachverbrennung genutzt werden. Die Nutzung der Kathodenabluft als Oxidationsmittel bietet zusätzlich den Vorteil, dass ein Wärmetauscher zur Vorwärmung der Nachverbrennungsluft oder des Anodenabgases entfällt.

Die Abgase der Nachverbrennung werden einem Wärmetauscher 5 zugeführt, wobei die entstehende Wärme auf einen Heizungswasserkreis HK übertragen wird. Der Wärmetauscher 5 ist stromab des Nachbrenners 6 angeordnet und weist eine Abgasausgangsleitung 9 mit einer Teilungsvorrichtung 13 zur Trennung des Abgasstroms aus dem Wärmetauscher 5 und Zuführung in dem Reformer 3 auf.

Aus systemtechnischen Gründen (z.B. Isolierungsgründen) kann es jedoch sein, dass zwischen der SOFC-Brennstoffzelle und dem Nachbrenner 6 kein Heizungswasser geführt werden kann, z.B. wegen einer möglichen lokalen Verdampfung des Heizungswassers. In diesem Fall wird das Anodenabgas der SOFC Brennstoffzelle dem Nachbrenner 6 zugeführt und dort nachverbrannt. Dazu kann es erforderlich sein, dass das Anodenabgas und/oder die Nachverbrennungsluft mit der Kathodenabluft vorgewärmt werden, um die die Aktivität des Gemisches zu steigern.

Das nachverbrannte Anodenabgas wird in dem Wärmetauscher 5 mit Heizungswasser aus einem Heizungswasserkreis HK abgekühlt. Das Anodenabgas enthält dabei auf der einen Seite das Produktwasser aus der elektrochemischen Reaktion von Wasserstoff und Sauerstoff in der Anode und auf der anderen Seite zusätzlich Produktwasser, welches durch die Nachverbrennung des Wasserstoffüberschusses gebildet wurde. Dadurch ist der Wassersdampfpartialdruck des Anodenabgases immer noch relativ hoch, so dass Wasser aus dem Anodenabgas teilweise oder vollständig auskondensiert werden kann, auch bei Rücklauftemperaturen des Heizungswassers oberhalb von 40°C.

Das gebildete Kondensat kann zur Steigerung des Reformerwirkungsgrades über Kondensatleitungen 11 und 7 und die Abgasausgangsleitung 9 in den Reformer 3 zurückgeführt werden. Weiterhin wird ein Teil des zumindest teilweise wasserfreien abgekühlten Anodenabgases über Abgasausgangsleitung 9 in den Reformer 3 zurückgeführt. Vorteil bei dieser Rückführung ist, dass das kohlendioxidreiche Anodenabgas dazu beiträgt, dass im Reformer die Bildung von Kohlenmonoxid durch die Beeinflussung des thermodynamischen Gleichgewichtes begünstigt wird.

Die Bildung von Kohlenmonoxid in SOFC Brennstoffzellensystemen ist besonders vorteilhaft, da durch die höhere Konzentration an Kohlendioxid das Boudouard-Gleichgewicht in Richtung der Kohlenmonoxid-Bildung verschoben wird, so dass Verkokungserscheinungen im Reformer und in der Brennstoffzelle vermindert oder vermieden werden. Die vermehrte Bildung von Kohlenmonoxid ist weiterhin deswegen günstig, da Kohlenmonoxid mit dem Produktwasser der elektrochemischen Reaktion in der Anode eine Wassergas-Shift-Reaktion ausführt und dabei Wasserstoff bildet, welcher als Brennstoff für die elektrochemische Reaktion zur Verfügung steht.

Weiterer Vorteil dieser Anordnung ist, dass die Anodenabgasrückführung bei Temperaturen kleiner als 200°C erfolgt und somit das Abgas mit konventionellen und kostengünstigen Abgasventilatoren gefördert werden kann, die für solche Temperaturen ausgelegt sind. Dies begünstigt die Wirtschaftlichkeit des Hochtemperaturbrennstoffzellensystems für die Hausenergieversorgung.

Mit einer Abgasteilungsvorrichtung 13 wird der Abgasstrom des Wärmetauschers 5 so aufgeteilt, dass ein Teil des Abgases dem Reformer 3 zugeführt wird. In dem Reformer 3 wird der Brennstoff mit Luftsauerstoff und den Abgasen gemischt. Dadurch entsteht ein Gemisch aus Brennstoff, Wasser, Sauerstoff und Stickstoff, welches an einem Katalysator zu einem wasserstoffreichen Brenngas (Reformat) umgesetzt werden kann. Der Sauerstoff- und Stickstoffanteil dieses Gemisches kann einerseits über die Veränderung der Luftzahl am Reformer eingestellt werden. Andererseits lässt sich der Sauerstoffanteil auch über eine Änderung der zurückgeführten Menge des Abgases einstellen. Ähnlich kann auch die Temperatur des Reformers geregelt werden.

Ein weiterer Teil des Abgases wird in den Wärmetauscher 12 über eine Leitung 15, angeordnet zwischen der Teilungsvorrichtung 13 und dem Wärmetauscher 12, zugeführt und dort mit Kathodenabluft aus der Leitung 14 vermischt und anschließend aus dem Wärmetauscher 12 über eine Abgasleitung abgeleitet. Dabei wird die noch in der Mischung des Kathodenablufts und des aufbereiteten Anodenabgases enthaltene Wärme auf einen flüssigen Wärmeträger z.B. Heizungswasser übertragen. Ein weiterer Teil des Abgases wird über Kondensatleitungen 11 und 7 und die Abgasausgangsleitung 9 in den Reformer 3 zugeführt.

Die Abgasteilungsvorrichtung 13 kann als Injektor oder als Dreiwegeventil ausgebildet sein. Auch eine Anordnung zur Strömungsrestriktion z.B. eine Blende kann als Abgasteilungsvorrichtung fungieren.

Bei einer Niedertemperaturbrennstoffzelle wird das Prozesswasser auf der Kathode gebildet, so dass in diesem Fall der Kondensationswärmetauscher 4 hinter der Kathode 2 angeordnet wird. Die Nachverbrennung in diesem Fall wird durch die Vorwärmung der Kathodenabluft im Wärmetauscher 5 stabilisiert.

Auch bei Schädigungen der Anode 1 durch Reduktions-Oxidations-Reaktionen können das erfindungsgemäße System und Verfahren eine Anwendung finden, um diese zu minimieren. Durch das Ein- und Ausschalten der Hausenergieversorgungsanlagen und somit durch den stetigen Wechsel zwischen Oxidations- und Reduktionsreaktionen an der Anode, wird die Anode einer Hochtemperaturbrennstoffzelle langfristig beschädigt.

Zur Minimierung solcher Reduktions-Oxidations-Einflüsse wird bei dem erfindungsgemäßen Verfahren zunächst die Brennstoffzelle vom Netzanschluss getrennt. Die Abgasteilungsvorrichtung 13 wird so eingestellt, dass kein Abgas zum Reformer strömen kann. Im System herrscht dann Reduktionszustand. Durch Diffusion dringt zunehmend Sauerstoff in den Abgasweg ein. Sobald eine bestimmte Spannung in der Brennstoffzelle gemessen wird, die Indiz für kritische Reduktions-Oxidations-Werte ist, wird wieder eine Reduktions-Atmosphäre durch Einleitung von Erdgas über die Anode hergestellt. Auch hier wird das Anodenabgas im Nachbrenner nachverbrannt und dann teilweise oder vollständig zurückgeführt.

## Patentansprüche

1. Hochtemperaturbrennstoffzellensystem, welches eine brenngasführende Anode (1) und eine luftführende Kathode (2), ein Reformer (3) zur Brenngasbereitung und mindestens ein Wärmetauscher (4, 5) zur Nachbehandlung von Anodenabgas sowie ein Nachbrenner (6), angeordnet stromab der Anode (1) aufweist **dadurch gekennzeichnet, dass**
• ein Kondensationswärmetauscher (4) angeordnet zwischen der Anode (1) und dem Nachbrenner (6) zur Abkühlung von brenngashaltigem Anodenabgas vorgesehen ist, wobei der Kondensations-wärmetauscher (4) eine Kondensatleitung (7), die mit dem Eingang des Reformers (3) verbunden ist, zur Rückführung kondensierten Wasserdampfs aufweist, und/oder
• ein Wärmetauscher (5) angeordnet stromab des Nachbrenners (6) vorgesehen ist, wobei der Wärmetauscher (5) eine Abgasausgangsleitung (9) mit einer Teilungsvorrichtung (13) und/oder eine Kondensatleitung (11) aufweist, wobei die Teilungsvorrichtung (13) den Abgasstrom zum Zuführen in dem Reformer (3) trennt, während die Kondensatleitung (11), die mit dem Eingang des Reformers (3) verbunden ist, zur Rückführung kondensierten Wasserdampfs dient.

2. Hochtemperaturbrennstoffzellensystem nach Anspruch 1, **dadurch gekennzeichnet, dass** eine Leitung (14) vom Ausgang der Kathode (2) zu einem Wärmetauscher (12) für die Zuführung von Kathodenabluft vorgesehen ist.

3. Hochtemperaturbrennstoffzellensystem nach Anspruch 1, **dadurch gekennzeichnet, dass** die Teilungsvorrichtung (13) zur Trennung eines Teils des Abgases aus dem Wärmetauscher (5) und seine Zuführung in den Wärmetauscher (12) über eine Leitung (15) angeordnet zwischen der Teilungsvorrichtung (13) und dem Wärmetauscher (12) vorgesehen ist.
